## Europäisches Patentamt

## European Patent Office

## Office européen des brevets

(19)

(11) Veröffentlichungsnummer: **0 008 068**
**B1**

(12) **EUROPÄISCHE PATENTSCHRIFT**

(45) Veröffentlichungstag der Patentschrift: 09.06.82

(51) Int. Cl.³: **B 23 K 20/08, B 32 B 15/01**

(21) Anmeldenummer: **79102740.2**

(22) Anmeldetag: **01.08.79**

(54) Verbundwerkstoff und Verfahren zu dessen Herstellung.

(30) Priorität: 16.08.78 DE 2835869

(43) Veröffentlichungstag der Anmeldung:
20.02.80 Patentblatt 80/4

(45) Bekanntmachung des Hinweises auf die Patenterteilung:
09.06.82 Patentblatt 82/23

(84) Benannte Vertragsstaaten:
DE FR GB SE

(56) Entgegenhaltungen:
DE - A - 2 458 739
DE - B - 1 551 167
FR - A - 768 672

ZEITSCHRIFT FÜR METALLKUNDE, Band 59
(1968), Nr. 2,
Stuttgart, DE
BOHM: "Plattieren von Stahl mit
Sondermetallen, insbesondere Molybdän, nach
dem Schockwellen-Verfahren", Seiten
104—111.

(73) Patentinhaber: Fraunhofer-Gesellschaft zur
Förderung der angewandten Forschung e.V.
Leonrodstrasse 54
D-8000 München 19 (DE)

(73) Patentinhaber: Deutsche Forschungs- und
Versuchsanstalt für Luft- und Raumfahrt e.V.
Linder Höhe
D-5000 Köln 90 (DE)

(72) Erfinder: Henne, Rudolf, Dr.
Teinacher Strasse 2
D-7030 Böblingen (DE)
Erfinder: Prümmer, Rolf, Dr.
Steinackerstrasse 7a
D-7803 Gundelfingen (DE)

(74) Vertreter: Hoeger, Stellrecht & Partner et al,
Uhlandstrasse 14c
D-7000 Stuttgart-1 (DE)

## Verbundwerkstoff und Verfahren zu dessen Herstellung

Die Erfindung betrifft einen Verbundwerkstoff für Einsatztemperaturen bis zu 1250°C bzw. 1350°C, der aus zwei Werkstoffen aufgebaut ist, von denen einer aus einer korrosions- und hochtemperaturbeständigen Basislegierung und der andere aus einem hochwarmfesten, refraktären Material besteht. Ferner betrifft die Erfindung ein Verfahren zu dessen Herstellung.

Für verschiedene Anwendungsbereiche, beispielsweise bei Wärmetauschern, beheizten chemischen Reaktoren, thermionischen Energieumwandlern mit Sonnen- oder Flammbeheizung oder bei Empfängern für solarthermische Anlagen ist es notwendig, Materialien zur Verfügung zu stellen, die bis zu Temperaturen von 1250 bis 1350°C chemisch und mechanisch stabil sind. Solche Materialien sollen keine schädlichen Verbindungen mit eindiffundierenden Gasen bilden, z.B. Hydride. Sie sollen gasdicht sein, vor allem gegenüber Wasserstoff, Stickstoff und Kohlenmonoxid und eine möglichst geringe Gasdiffusion zeigen. Weitere Forderungen, die an solche Werkstoffe gestellt werden, sind eine hohe thermische Leitfähigkeit, eine mindestens einseitige Verzunderungsbeständigkeit bis zu Temperaturen um 1300°C auch gegen heiße korrosive Flammengase und mindestens auf einer Seite chemische Beständigkeit, beispielsweise gegen flüssige Metalle wie Natrium, Kalium, Zäsium oder Lithium. Schließlich wird noch gefordert, daß diese Materialien einen sehr niedrigen Dampfdruck aufweisen, damit die inneren Oberflächen von evakuierten Anlagen nicht durch Abdampfprodukte der Materialien kontaminiert werden.

Dies ist eine Palette von Forderungen, die von herkömmlichen Werkstoffen nicht erfüllt werden können. Es gibt zwar Materialien, die einen Teil dieser geforderten Eigenschaften erfüllen. So sind hochtemperaturbeständige Eisen-, Nickel- und Chrom-Basislegierungen bekannt, sogenannte Superlegierungen, die relativ leicht herstellbar sind und bis zu Temperaturen von maximal 1350°C durch eine oberflächliche Oxidation korrosionsbeständig sind. Durch diese oberflächliche Oxidation wird auch die Wasserstoffdiffusion vermindert. Jedoch weisen diese Materialien den Nachteil auf, daß sie nur eine geringe mechanische Festigkeit bei den Einsatztemperaturen und eine hohe thermische Ausdehnung zeigen, daß ihre elektrische Leitfähigkeit gering ist und daß sie einen hohen Dampdruck haben, d.h. daß die Abdampfrate hoch ist.

Andererseits ist eine Gruppe von hochwarmfesten, refraktären Materialien bekannt, beispielsweise Wolfram, Molybdän, Tantal, Niob oder Legierungen dieser Metalle, die bei den Einsatztemperaturen eine ausreichende mechanische Festigkeit, eine relativ geringe thermische Ausdehnung, einen geringen Dampfdruck und gute thermische und elektrische Leitfähigkeit aufweisen. Jedoch sind diese refraktären Materialien bei den Betriebstemperaturen (1250°C bis 1350°C) nicht korrosionsbeständig.

Um diesem Nachteil zu begegnen, hat man auf refraktären Materialien bereits Schutzschichten aufgebracht, beispielsweise Molybdändisilizid auf Molybdän, wobei diese Schutzschichten durch Plasmaspritzen aufgebracht wurden. Abgesehen davon, daß dieses Verfahren zusätzlichen Aufwand erfordert, ergibt sich der Nachteil, daß solche Schutzschichten nicht absolut dicht sind und daher nachbehandelt werden müssen. Außerdem ist es äußerst schwierig, eine flächige, einwandfreie Verbindung der Schutzschichten mit dem refraktären Material zu erreichen, so daß sich Risse und Ablösungen bilden, an denen eine Korrosion des refraktären Materials einsetzt.

Es sind bereits Verbindungen von hochwarmfesten, refraktären Materialien und von korrosions- und hochtemperaturbeständigen Basislegierungen bekannt (DE—B— 1 551 167). Bei dieser bekannten Anordnung wurde ein zunderbeständiger Werkstoff (Nickelbasislegierung) mit einer Einlage aus einem hochwarmfesten Werkstoff versehen. Die Einlagen hatten dabei lediglich den Zweck, Turbinenschaufeln zu verstärken. Bei diesem bekannten Verbundwerkstoff wurde die Nickelbasislegierung um die Einlage herum gegossen oder in Pulverform um die Einlage gepreßt und dicht gesintert.

Der Erfindung liegt die Aufgabe zugrunde, einen Werkstoff vorzuschlagen, der die eingangs aufgeführten Eigenschaften insgesamt aufweist, der also bei Einsatztemperaturen bis zu 1250°C bzw. 1350°C chemisch und mechanisch stabil, korrosionsbeständig, gasundurchlässig sowie elektrisch und thermisch gut leitfähig ist.

Diese Aufgabe wird erfindungsgemäß durch einen Verbundwerkstoff der eingangs beschriebenen Art gelöst, der dadurch gekennzeichnet ist, daß die Basislegierung eine in diesem Zusammenhang bekannte Nickelbasislegierung, eine Eisen- oder eine Chrombasislegierung ist, daß die beiden Werkstoffe als Schichten vorliegen und daß die beiden Schichten durch Explosivplattierung miteinander verbunden sind.

Man erhält auf diese Weise ein Material, welches die geforderten Eigenschaften aufweist. Das refraktäre Material, welches bei den Einsatztemperaturen insbesondere die geforderte mechanische Festigkeit aufweist, dient als Stützmaterial für die mechanisch wenig stabile Eisen-, Nickel- oder Chrombasislegierung, während diese Superlegierungslage das refraktäre Material gegen Korrosion schützt.

Probleme können sich dabei wegen der unterschiedlichen thermischen Ausdehnung der Materialien ergeben. Um diese Probleme zu überwinden, wird gemäß einer bevorzugten Ausführungsform der Erfindung vorgeschlagen, daß die Schichtstärke des Materials, das bei hohen Temperaturen die geringere mechanische Festigkeit aufweist, geringer ist als die des anderen Materials.

Es wird also eine verhältnismäßig dicke Schicht des refraktären Materials mit einer dünnen Schicht der Eisen-, Nickel- oder Chrombasislegierung durch Explosivplattierung verbunden. Auf diese Weise gelingt es, die Wärmeausdehnung der Basislegierung, die an sich relativ groß ist, im wesentlichen auf die Wärmeausdehnung herabzusetzen, die das refraktäre Stützmaterial aufweist. Dadurch wird erreicht, daß die Eisen-, Nickel- oder Chrombasislegierung bei den hohen Einsatztemperaturen "fließt", so daß diese Schicht die geringeren Wärmedehnungen des refraktären Materials mitmacht, ohne sich von diesem abzulösen. Die Wärmedehnungskoeffizienten des Verbundes liegen dabei sehr nahe bei denen des refraktären Materials.

Der Erfindung liegt weiterhin die Aufgabe zugrunde, ein Verfahren zur Herstellung dieses Verbundstoffes vorzuschlagen. Diese Aufgabe wird erfindungsgemäß dadurch gelöst, daß man die Eisen-, Nickel- oder Chrombasislegierung und das refraktäre Material durch Explosivplattierung miteinander verschweißt, wobei man die Anordnung der aus dem refraktären Material bestehenden Grundplatte und der aus der Basislegierung bestehenden Flugplatte parallel wählt und die Explosivladung derart dimensioniert, daß die Kollisionsgeschwindigkeit $v_k$ zwischen 2700 und 3500 m/sec und der Kollisionswinkel ß zwischen 15° und 25° liegen.

Die Verbindung dieser sehr unterschiedlichen Werkstoffe ist außerordentlich schwierig. Eine Verbindung durch Löten führt aufgrund der sehr unterschiedlichen Wärmedehnungswerte der zu verbindenden Materialien zu Rissen und teilweise Ablösung beim Abkühlen. Außerdem ist es schwierig, ein Lot zu entwickeln und anzuwenden, dessen Schmelzpunkt oberhalb 1300°C, aber unterhalb der kritischen Temperatur (Schmelztemperatur, eutektische Temperatur) der Hochtemperaturlegierung bzw. des Metallverbundes liegen muß. Bei einer Kombination einer Nickelbasislegierung mit Molybdän liegt diese Temperatur bei 1315°C, bei einer Eisenbasislegierung mit Molybdän bei 1375°C. Außerdem ist es schwierig, beim Lötvorgang spröde intermetallische Phasen zu vermeiden und die geforderte Festigkeit der Lötstelle auch für längere Betriebszeiten zu garantieren.

Lediglich die Explosivplattierung mit der kurzen Wechselwirkungszeit beider Komponenten im oberflächig quasi flüssigen Zustand und der bei der erfindungsgemäßen Führung des Vorgangs vermeidbaren Ausbildung intermetallischer Phasen in der Übergangszone beider Materialien ermöglicht eine zuverlässige Verbindung. Dabei bilden sich die charakteristischen, wellenförmigen Verzahnungen zwischen den Materialien aus.

Günstig ist es, wenn man das refraktäre Material in tiefziehfähiger Form verwendet, indem man es beispielsweise in verschiedenen Richtungen walzt.

Vorzugsweise erniedrigt man vor dem Explosivplattieren die Härte der Eisen-, Nickel- oder Chrombasislegierung und/oder des refraktären Materials, z.B. durch Glühen. Günstig ist es auch, wenn man die Oberfläche der zu verbindenden Materialien von einer Oxidschicht befreit.

Von Vorteil ist es, wenn die refraktäre Schicht der zu verbindenden Materialien während des Explosivplattierens erwärmt ist, und zwar auf 300 bis 500°C, vorzugsweise etwa 400°C. Diese Erwärmung dient der Erhöhung der Duktilität, der Weichheit und der Vermeidung von Rissen, da der Sprengvorgang um so weniger problematisch ist, je weicher die Oberflächen der zu verbindenden Materialien gemacht werden können.

Günstig ist es, das Explosionsplattieren mit der erwärmten refraktären Materialschicht in einer inerten, insbesondere $CO_2$-Atmosphäre, auszuführen, weil dadurch das Auftreten oxidischer Oberflächenbeläge verhindert wird.

Um die durch die verschiedenen Wärmeausdehnungskoeffizienten der verschiedenen Materialien auftretenden Schwierigkeiten zu überwinden, ist bei einem weiteren bevorzugten Ausführungsbiespiel der Erfindung vorgesehen, dass man die Schichtstärke des bei den Einsatztemperaturen mechanisch weniger festen Materials dünner wählt als die des anderen Materials.

Vorteilhaft ist es, wenn man den Verbundwerkstoff nach dem Verbinden durch Explosivplattieren auswalzt. Es ist damit möglich, Schichtdicken zu erreichen, die für eine Verbindung durch die Explosivplattierung nicht mehr geeignet wären. Die Festigkeit der Verbindung bleibt dabei auch beim Auswalzen erhalten.

Vorteilhaft ist es auch, wenn man beim Explosionsplattieren eine dünne Metallfolie zwischen die Basislegierungsschicht und die aus refraktärem Material gebildete Schicht einlegt. Dadurch lassen sich die Verbindungseigenschaften der Verbundmaterialien verbessern, da sie als Diffusionssperre dient. Dieses Zwischenmaterial muss einen hohen Schmelzpunkt aufweisen und darf keine eutektische Reaktion mit den Verbundpartnern zeigen. Beispielsweise kann die Zwischenschicht aus Platin oder Palladium bestehen.

Als refraktäre Materialien kommen im wesentlichen Wolfram, Molybdän, Tantal und Niob sowie Legierungen dieser Metalle in Frage, insbesondere auch titanzirkon-stabilisiertes Molybdän (TZM). Die Eisen-, Nickel- oder Chrom-Basislegierungen sind hochtemperaturbeständige Legierungen, die überwiegend Eisen, Nickel oder Chrom sowie Zusätze von Aluminium, Molybdän, Vanadium oder Chrom enthalten. Beispielsweise lässt sich mit dem erfindungsgemässen Verfahren ein Verbundwerkstoff aus Molybdän und einer der im folgenden beschriebenen Basislegierungen herstellen:

1. Nickel-Basislegierung "Inconel 601", Bestandteile:

60% Nickel
14% Eisen
23% Chrom
1,4% Aluminium
1,6% übrige Zusätze.

2. Eisen-Basislegierung "Kanthal A1", Bestandteile:

72% Eisen
22% Chrom
5,5% Aluminium
0,5% Kobalt.

Das Schichtdickenverhältnis zwischen hochtemperaturbeständiger Basislegierung einerseits und hochwarmfestem, refraktärem Material andererseits kann gemäss der Erfindung vorzugsweise zwischen 1:2 und 1:5 liegen, jedoch sind auch noch unterschiedlichere Schichtdicken möglich.

Die nachfolgende Beschreibung bevorzugter Ausführungsformen der Erfindung dient im Zusammenhang mit der Zeichnung der näheren Erläuterung. Es zeigen:

Fig. 1 eine schematische Darstellung der zu verbindenden Materialien vor der Explosionsplattierung und

Fig. 2 eine schematische Darstellung der Anordnung der Fig. 1 bei der Explosionsplattierung.

Einer Grundplatte 1 aus einem hochwarmfesten, refraktären Material, z.B. Molybdän, steht parallel eine Flugplatte 2 aus einer Eisen-, Nickel- oder Chrom-Basislegierung (hochtemperaturbeständige Superlegierung) gegenüber, beispielsweise eine Platte aus 60% Nickel, 14% Eisen, 23% Chrom und 1,4% Aluminium (Inconel 601, Material Nr. 2.4851 nach DIN 17744 und DIN 17750) oder aus 72% Eisen, 22% Chrom, 5,5% Aluminium und 0,5% Kobalt (Kanthal A1). Auf der der Grundplatte 1 gegenüberliegenden Seite ist die Flugplatte 2 mit einem Sprengstoff 3 beschichtet, in den ein Zünder 4 eingebettet ist. Gemäss der Erfindung ist die Flugplatte 2 wesentlich dünner ausgebildet als die Grundplatte 1.

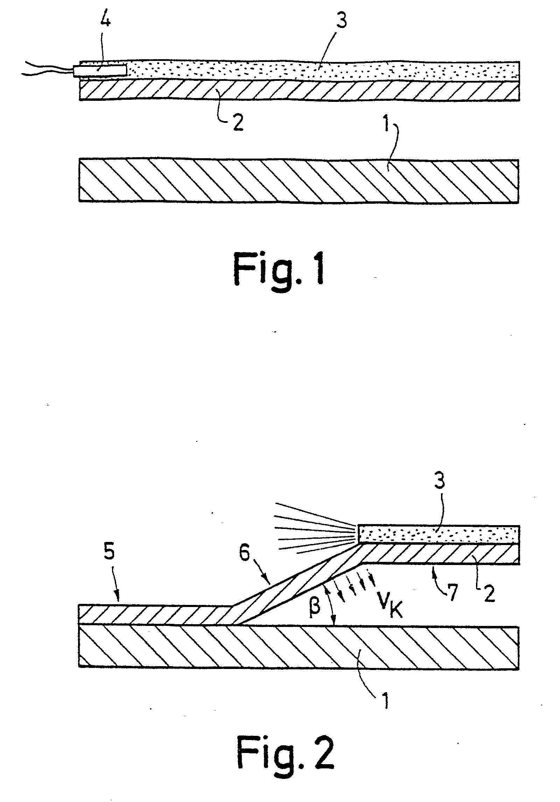

Zur Explosionsplattierung wird der Sprengstoff 3 mittels des Zünders 4 gezündet. In Fig. 2 ist die Anordnung während des Explosionsvorganges schematisch dargestellt. In einem ersten Bereich 5, in dem die Explosion bereits stattgefunden hat, ist die Flugplatte 2 gegen die Grundplatte 1 geschleudert und mit dieser verschweisst worden. In einem mittleren Bereich 6, in welchem die Explosion gerade erfolgt, schliesst die Flugplatte 2 mit der Grundplatte 1 einen Winkel $\beta$ ein, der gemäss der Erfindung zwischen 15 und 25° liegt. In diesem Bereich kommt die Flugplatte 2 sukzessive mit der Grundplatte 1 in innige Berührung, wodurch die Materialien oberflächig flüssig werden und sich innig miteinander verbinden. In einem dritten Bereich 7 ist die Explosion noch nicht erfolgt.

Die Sprengladung 3 wird derart dimensioniert, dass die Kollisionsgeschwindigkeit $v_k$ zwischen 2700 und 3500 m/sec liegt.

In dem dargestellten Ausführungsbeispiel wird die Grundplatte 1 nur einseitig mit einer Schicht einer Eisen-, Nickel- oder Chrom-Basislegierung verbunden. Es ist jedoch auch möglich, den Verbundwerkstoff dreischichtig aufzubauen und zu diesem Zweck zu beiden Seiten der Grundplatte eine Schicht einer hochtemperaturbeständigen Basislegierung anzuordnen. Diese Verbindung kann gleichzeitig oder nacheinander erfolgen.

In nicht dargestellter Weise kann zwischen die beiden miteinander zu verbindenden Schichten eine sehr dünne Zwischenschicht eingelegt werden, beispielsweise aus Platin oder Palladium, welche als Diffusionssperre dient und die Verbindungseigenschaften verbessert. Bei Verwendung eines Zwischenlagenmaterials, dessen thermische Ausdehnung zwischen der des hochwarmfesten, refraktären Materials und der der hochtemperaturbeständigen Superlegierung liegt, können die Schwierigkeiten, die sich aufgrund der unterschiedlichen thermischen Ausdehnung der beiden miteinander zu verbindenden Schichten ergeben, weiter reduziert werden.

Der auf diese Weise hergestellte Verbundwerkstoff kann zur Erzielung der gewünschten Schichtdicken ausgewalzt werden.

## Patentansprüche

1. Verbundwerkstoff für Einsatztemperaturen über 900°C, der aus zwei Werkstoffen aufgebaut ist, von denen einer aus einer korrosions- und hochtemperaturbeständigen Basislegierung und der andere aus einem hochwarmfesten, refraktären Material besteht, dadurch gekennzeichnet, daß die Basislegierung eine in diesem Zusammenhang bekannte Nickelbasislegierung oder eine Eisen- oder Chrombasislegierung ist, daß die beiden Werkstoffe als Schichten vorliegen und daß die beiden Schichten durch Explosivplattierung miteinander verbunden sind.

2. Verbundwerkstoff nach Anspruch 1, dadurch gekennzeichnet, dass die Schichtstärke des Materials, das bei hohen Temperaturen die geringere mechanische Festigkeit aufweist, geringer ist als die des anderen Materials.

3. Verbundwerkstoff nach Anspruch 2, dadurch gekennzeichnet, dass das Schichtdickenverhältnis zwischen 1:5 und 1:2 liegt.

4. Verbundwerkstoff nach einem der vorstehenden Ansprüche, dadurch gekennzeichnet, dass er dreischichtig aufgebaut ist, wobei sich auf beiden Seiten der Schicht aus refraktärem Material eine Schicht der hochtemperaturbeständigen Basislegierung befindet.

5. Verbundwerkstoff nach einem der voranstehenden Ansprüche, dadurch gekennzeichnet, dass zwischen der Schicht der Nickel-, Eisen- oder Chrom-Basislegierung und der Schicht des refraktären Materials als Diffusionssperre eine dünne Zwischenschicht eines Metalls angeordnet ist, welches einen hohen Schmelzpunkt aufweist und bei welchem keine eutektische Reaktion mit den Verbundpartnern auftritt.

6. Verbundwerkstoff nach Anspruch 5, dadurch gekennzeichnet, dass die dünne Zwischenschicht aus Platin oder Palladium besteht.

7. Verbundwerkstoff nach einem der voranstehenden Ansprüche, dadurch gekennzeichnet, dass das refraktäre Material Molybdän ist und die Basislegierung 60% Nickel, 14% Eisen, 23% Chrom, 1,4% Aluminium und 1,6% übrige Bestandteile oder 72% Eisen, 22% Chrom, 5,5% Aluminium und 0,5% Kobalt enthält.

8. Verfahren zur Herstellung des Verbundwerkstoffes der Ansprüche 1 bis 7, dadurch gekennzeichnet, dass man die Nickel-, Eisen- oder Chrom-Basislegierung und das refraktäre Material durch Explosionsplattierung miteinander verbindet, wobei man die Anordnung der aus dem refraktären Material bestehenden Grundplatte und der aus der hochtemperaturbeständigen Basislegierung bestehenden Flugplatte parallel wählt und die Explosionsladung derart dimensioniert, dass die Kollisionsgeschwindigkeit $v_K$ zwischen 2700 und 3500 m/sec und der Kollisionswinkel $\beta$ zwischen 15° und 25° liegen.

9. Verfahren nach Anspruch 8, dadurch gekennzeichnet, dass man das refraktäre Material in tiefziehfähiger Form verwendet.

10. Verfahren nach einem der Ansprüche 8 oder 9, dadurch gekennzeichnet, dass man vor dem Explosionsplattieren die Härte der hochtemperaturbeständigen Basislegierung und/oder des refraktären Materials erniedrigt, z.B. durch Glühen.

11. Verfahren nach einem der Ansprüche 8 bis 10, dadurch gekennzeichnet, dass man die Oberfläche der zu verbindenden Materialien von einer Oxidschicht befreit.

12. Verfahren nach einem der Ansprüche 8 bis 11, dadurch gekennzeichnet, dass man die Schichtstärke des bei den Einsatztemperaturen mechanisch weniger festen Materials dünner wählt als die des anderen Materials.

13. Verfahren nach einem der Ansprüche 8 bis 12, dadurch gekennzeichnet, dass man den Verbundwerkstoff nach dem Verbinden durch Explosionsplattieren auswalzt.

14. Verfahren nach einem der Ansprüche 8 bis 13, dadurch gekennzeichnet, dass man beim Explosionsplattieren eine dünne Metallfolie zwischen die hochtemperaturbeständige Basislegierungsschicht und die aus refraktärem Material gebildete Schicht einlegt.

15. Verfahren nach einem der Ansprüche 8 bis 14, dadurch gekennzeichnet, daß das Explosionsplattieren mit einer erwärmten refraktären Materialschicht ausgeführt wird.

16. Verfahren nach Anspruch 15, dadurch gekennzeichnet, daß die refraktäre Materialschicht auf eine Temperatur von 300 bis 500°C, insbesondere etwa 400°C, erwärmt wird.

17. Verfahren nach Anspruch 15 oder 16, dadurch gekennzeichnet, daß das Explosionsplattieren in einer $CO_2$-Atmosphäre vorgenommen wird.

**Claims**

1. Composite material for operating temperatures of above 900°C, which is composed of two materials, one of which consists of a base alloy which is resistant to corrosion and high temperatures and the other of a high temperature, refractory material, characterised in that the base alloy is a nickel base alloy, which is known in this connection, or an iron or chromium base alloy, that the two materials are present as layers and that the two layers are connected together by explosive plating.

2. Composite material according to claim 1, characterised in that the layer thickness of the material which has the lower mechanical strength at high temperatures is less than that of the other material.

3. Composite material according to claim 2, characterised in that the layer thickness ratio is between 1:5 and 1:2.

4. Composite material according to one of the preceding claims, characterised in that it is composed of three layers, a layer of the base alloy which is resistant to high temperatures being disposed on both sides of the layer of refractory material.

5. Composite material according to one of the preceding claims, characterised in that between the layer of the nickel, iron or chromium base alloy and the layer of the refractory material a thin intermediate layer of metal is arranged as a diffusion barrier, which metal has a high melting point and does not cause an eutectic reaction with the composite partners.

6. Composite material according to claim 5, characterised in that the thin intermediate layer consists of platinum or palladium.

7. Composite material according to one of the preceding claims, characterised in that the refractory material is molybdenum and the base alloy comprises 60% nickel, 14% iron, 23% chromium, 1.4% aluminium and 1.6% other components or 72% iron, 22% chromium, 5.5% aluminium and 0.5% cobalt.

8. Process for manufacturing the composite material of claims 1 to 7, characterised in that the nickel, iron or chromium base alloy and the refractory material are connected together by explosion plating, the arrangement of the base plate consisting of the refractory material and of the flying plate consisting of the base alloy which is resistant to high temperatures being parallel and the explosion charge being of a size such that the collision speed $v_k$ is between 2700 and 3500 m/sec and the collision angle $\beta$ is between 15° and 25°.

9. Process according to claim 8, characterised in that the refractory material is used in a form which can be deep-drawn.

10. Process according to one of claims 8 or 9, characterised in that the hardness of the base alloy which is resistant to high temperatures and/or of the refractory material is reduced before explosion plating, e.g. by annealing.

11. Process according to one of claims 8 to 10, characterised in that an oxide layer is removed from the surface of the materials which are to be connected.

12. Process according to one of claims 8 to 11, characterised in that the layer thickness of the material which has a lower mechanical strength at operating temperatures. is thinner than that of the other material.

13. Process according to one of claims 8 to 12, characterised in that the composite material is rolled out after connection by explosion plating.

14. Process according to one of claims 8 to 13, characterised in that, when explosion plating, a thin metal foil is inserted between the base alloy layer which is resistant to high temperatures and the layer formed of refractory material.

15. Process according to one of claims 8 to 14, characterised in that the explosion plating is carried out with a heated refractory material layer.

16. Process according to claim 15, characterised in that the refractory material layer is heated to a temperature of 300 to 500°C, particularly to approximately 400°C.

17. Process according to claim 15 or 16, characterised in that the explosion plating is carried out in a $CO_2$-atmosphere.

## Revendications

1. Matière composite pour des températures d'utilisation supérieures à 900°C, qui est constituée de deux matières dont l'une consiste en un alliage de base résistant à la corrosion et stable aux températures élevées et l'autre en une matière réfractaire résistante aux hautes températures, caractérisée en ce que l'alliage de base est un alliage à base de nickel connu de ce point de vue ou un alliage à base de fer ou de chrome, en ce que les deux matières sont à l'état de couches et en ce que les deux couches sont liées ensemble par placage explosif.

2. Matière composite selon la revendication 1, caractérisée en ce que l'épaisseur de couche de la matière qui présente la résistance mécanique la plus faible aux températures élevées est inférieure à celle de l'autre matière.

3. Matière composite selon la revendication 2, caractérisée en ce que le rapport des épaisseurs de couche est compris entre 1:5 et 1:2.

4. Matière composite selon l'une des revendications précédentes, caractérisée en ce qu'elle est à trois couches, caractérisée en ce qu'elle comporte une couche de l'alliage de base résistant à haute température sur les deux faces de la couche de matière réfractaire.

5. Matière composite selon l'une des revendications précédentes, caractérisée en ce qu'elle comporte comme barrière de diffusion entre la couche de l'alliage à base de nickel, de fer ou de chrome et la couche de la matière réfractaire, une couche intermédiaire mince d'un métal qui présente un point de fusion élevé et pour lequel il ne se produit pas de réaction eutectique avec les autres composants de la matière composite.

6. Matière composite selon la revendication 5, caractérisée en ce que la couche intermédiaire mince consiste en platine ou en palladium.

7. Matière composite selon l'une des revendications précédentes, caractérisée en ce que la matière réfractaire est du molybdène et l'alliage de base contient 60 % de nickel, 14 % de fer, 23 % de chrome, 1,4 % d'aluminium et 1,6 % d'autres constituants ou bien 72 % de fer, 22 % de chrome, 5,5 % d'aluminium et 0,5 % de cobalt.

8. Procédé pour la préparation de la matière composite des revendications 1 à 7, caractérisé en ce que l'on lie ensemble l'alliage de base de nickel, de fer ou de chrome et la matière réfractaire par placage par explosion, en choisissant une disposition parallèle de la plaque de base consistant en la matière réfractaire et de la plaque de revêtement consistant en l'alliage de base stable à haute température et on ajuste la charge explosive de telle sorte que la vitesse de collision $v_c$ est comprise entre 2700 et 3500 m/s et l'angle de collision $\beta$ est compris entre 15 et 25°.

9. Procédé selon la revendication 8, caracteisé en ce que la matière réfractaire est utilisée sous une forme emboutissable.

10. Procédé selon l'une des revendications 8 ou 9, caractérisé en ce que l'on abaisse la dureté de l'alliage de base stable à haute température et/ou de la matière réfractaire, par exemple par calcination, avant le placage par explosion.

11. Procédé selon l'une des revendications 8 à 10, caractérisé en ce que l'on débarrasse d'une couche d'oxyde la surface des matières à lier.

12. Procédé selon l'une des revendications 8 à 11, caractérisé en ce que l'on choisit l'épaisseur de couche de la matière mécaniquement moins stable aux températures d'application plus faible que celle de l'autre matière.

13. Procédé selon l'une des revendications 8 à 12, caractérisé en ce que l'on lamine la matière composite après l'assemblage par placage par explosion.

14. Procédé selon l'une des revendications 8 à 13, caractérisé en ce que l'on intercale dans le placage par explosion une feuille métallique mince entre la couche d'alliage de base stable à haute température et la couche formée de la matière réfractaire.

15. Procédé selon l'une des revendications 8 à 14, caractérisé en ce que le placage par explosion est mis en oeuvre avec une couche de matière réfractaire chauffée.

16. Procédé selon la revendication 15, caractérisé en ce que la couche de matière réfractaire est chauffée à une température de 300 à 500°C, en particulier d'environ 400°C.

17. Procédé selon la revendication 15 ou 16, caractérisé en ce que le placage par explosion est effectué dans une atmosphère de $CO_2$.

Fig. 1

Fig. 2